# EUROPÄISCHE PATENTSCHRIFT

(11) **EP 2 270 345 B1**
(45) Veröffentlichungstag und Bekanntmachung des Hinweises auf die Patenterteilung: **04.01.2012**
(21) Anmeldenummer: 10167897.7
(22) Anmeldetag: 30.06.2010
(51) Int. Cl.: F16C 19/30, F16C 33/46, F16C 35/06, F16D 65/14, F16H 25/22

(54) **Kugelgewindetrieb mit Axiallager**
Ball screw drive with axial bearing
Vis d'entraînement à billes dotée d'un palier axial

(30) Priorität: 04.07.2009 DE 102009031709
(43) Veröffentlichungstag der Anmeldung: 05.01.2011
(73) Patentinhaber: Schaeffler Technologies GmbH & Co. KG, 91074 Herzogenaurach (DE)
(72) Erfinder: Osterlänger, Jürgen, 91448, Emskirchen (DE); Bärthlein, Stefanie, 91460, Baudenbach (DE); Miko, Josef, 91448, Emskirchen (DE)

(56) Entgegenhaltungen:
- EP-B1- 1 058 795
- DE-A1- 10 142 644
- GB-A- 848 745
- US-A1- 2003 165 281
- US-B1- 6 739 436

## Beschreibung

### Gebiet der Erfindung

Die vorliegende Erfindung betrifft einen Kugelgewindetrieb, mit einer auf einer Gewindespindel angeordneten Spindelmutter. Bei derartigen Kugelgewindetrieben wird eine Relativdrehung zwischen der Spindelmutter und der Gewindespindel in eine axiale Relativverschiebung zwischen der Gewindespindel und der Spindelmutter umgewandelt.

### Hintergrund der Erfindung

Aus DE 40 21 572 A1 beispielsweise ist eine Scheibenbremsanlage eines Fahrzeuges bekannt geworden, bei der eine Bremszange eine Bremsscheibe umgreift, wobei die Bremsscheibe zwischen den Bremsbelägen eingespannt werden kann, indem ein Bremskolben gegen einen der Bremsbeläge angedrückt wird. Der Bremskolben ist mit einer Spindelmutter eines Kugelgewindetriebes verbunden, die unter Zwischenschaltung von Kugeln auf einer Gewindespindel angeordnet ist. Die Gewindespindel kann mittels eines Elektromotors in Rotation versetzt werden, wobei unter der Relativdrehung zwischen der Gewindespindel und der Spindelmutter der mit der Spindelmutter verbundene Bremskolben axial gegenüber der Gewindespindel in Richtung auf die Bremsbeläge verlagert werden kann. Die Gewindespindel ist an einem Gehäuse der Bremseinrichtung über ein Axiallager gelagert, so dass die von dem Bremskolben ausgeübte axiale Bremskraft über dieses Axiallager in das Gehäuse eingeleitet werden kann. Das Axiallager weist bei dieser Ausführung mehrere Lagerteile auf: einen Wälzkörperkranz, die aus einer Vielzahl von über den Umfang verteilt angeordneten Wälzkörpern gebildet ist, gegebenenfalls ein Axiallagerkäfig, in dessen Taschen die Wälzkörper angeordnet sind, und gegebenenfalls Axiallagerscheiben zu beiden Seiten der Wälzkörper.

Bei der Montage derartiger Kugelgewindetriebe insbesondere in derartige Bremseinrichtungen wird üblicherweise das Axialwälzlager auf die Gewindespindel aufgesetzt und der vormontierte Kugelgewindetrieb wird schließlich in das Gehäuse eingesetzt. Beispielsweise Axialwälzlager bestehen aus einer Vielzahl von Einzelteilen, so dass bei der Montage derartiger Bremseinrichtungen eine Vielzahl von Montageschritten erforderlich ist.

US 6,739,436 B1 offenbart einen Schraubenaktuator, der einen Kugelgewindetrieb aufweist, dessen Gewindespindel über ein Axiallager an einem Aktuatorkopf abgestützt ist. Das Axiallager weist einen an einem Ende der Gewindespindel angeordneten Radialflansch, sowie eine Axiallagerscheibe und zwischen dem Radialflansch und der Axiallagerscheibe angeordnete Kugeln auf, die an einander zugewandten Laufbahnen des Radialflansches und der Axiallagerscheibe abwälzen können. Die Axiallagerscheibe ist als Lagerteil an dem Radialflansch verliersicher mittels einen Bauteils gehalten, das in Ausnehmungen des Lagerteils sowie des Radialflansches eingreift. Als Verliersicherung ist demzufolge ein separates Bauteil vorgesehen.

### Aufgabe der Erfindung

Aufgabe der vorliegenden Erfindung war es, einen Kugelgewindetrieb nach den Merkmalen des Oberbegriffs des Anspruchs 1 anzugeben, der einfach zu montieren ist.

### Zusammenfassung der Erfindung

Erfindungsgemäß wurde diese Aufgabe durch den Kugelgewindetrieb gemäß Anspruch 1 gelöst. Dadurch, dass das gegenüber der Gewindespindel drehbar angeordnete Lagerteil über eine Verliersicherung an der Gewindespindel oder an einem fest mit der Gewindespindel verbundenen Wellenabschnitt angeordnet ist, kann der mit Wälzkörpern bestückter Axiallagerkäfig auf die Gewindespindel vormontiert werden, so dass der Kugelgewindetrieb mit diesem vormontierten Lagerteil direkt ohne weitere Montagemaßnahmen beispielsweise in ein Gehäuse eingebaut werden kann. Montagefehler sind hierbei ausgeschlossen.

Als Verliersicherung sind erfindungsgemäß federelastisch auslenkbare Rasten oder Finger oder sonstige Schnappmittel vorgesehen, die in eine an der Gewindespindel vorgesehene Aufnahme eingreifen, so dass das Lagerteil verliersicher gehalten ist.

Die an der Gewindespindel vorgesehene Aufnahme kann beispielsweise durch eine umlaufende Ringnut gebildet sein, aber auch durch eine Anprägung, bei der beispielsweise durch gezieltes Versetzen von Material der Gewindespindel ein umlaufender Wulst erzeugt werden kann, so dass das Lagerteil durch den Wulst einwandfrei in axialer Richtung auf der Gewindespindel gehalten ist.

Bei dem erfindungsgemäßen Kugelgewindetrieb ist der Axiallager durch ein Axialwälzlager ausgeführt, das einen Axiallagerkäfig mit über den Umfang verteilt angeordneten Taschen zur Aufnahme der Wälzkörper versehen, wobei dieser Axiallagerkäfig mit beispielsweise durch Zungen gebildete Rasten versehen ist, die in eine Aufnahme der Gewindespindel eingreifen. Diese Zungen sind vorzugsweise federelastisch ausgebildet, so dass beim Aufschieben des Axiallagerkäfig auf die Gewindespindel diese Zungen unter Ausfedern in diese Aufnahme eingreifen.

Diese Raste kann als am Innenumfang des Axiallagerkäfig angeordneter Käfigbord ausgebildet sein. Vorzugsweise ist dieser Käfigbord dann derart dünnwandig ausgebildet, dass er federelastische Eigenschaften aufweist, um radial nach innen in diese Aufnahme einzuferdern.

Der Käfigbord kann entlang der Spindelachse gesehen etwa polygonförmig ausgebildet sein und mit seinen elastisch aufweitbaren Polygonseiten in die Aufnahme eingreifen.

Das Axiallager kann eine mit einer Axiallagerfläche versehene Spindelscheibe aufweisen, die mit einem umfangsseitig wirksamen Anschlag für die Spindelmutter versehen ist. Bei einem derartig weitergebildeten Kugelgewindetrieb verhindert dieser umfangsseitig wirksame Anschlag ein unerwünschtes Festziehen der Spindelmutter, wenn diese auf die Spindelscheibe aufsetzt; denn bevor die Spindelmutter axial gegen diese Spindelscheibe durch eine Schraubbewegung verspannt werden kann, greift der umfangsseitig wirksame Anschlag, der eine weitere Relativdrehung zwischen der Spindelmutter und der Spindelscheibe verhindert.

Insbesondere bei Verwendung erfindungsgemäßer Kugelgewindetriebe in Bremseinrichtungen zur Betätigung einer Bremse kann es zweckmäßig sein, dass diese Spindelscheibe zwar in beiden Drehrichtungen formschlüssig gehalten, jedoch taumelfähig auf der Gewindespindel angeordnet ist. Die taumelfähige Anordnung verhindert ein unerwünschtes Verkanten einzelner Bauteile, so dass ein einwandfreier Betrieb des erfindungsgemäßen Kugelgewindetriebes gewährleistet werden kann. Wenn erfindungsemäße Kugelgewindetriebe an Bremszangen montiert werden, können die Schenkel der Bremszange unter der axial wirksamen Bremskraft aufgeweitet werden, die winkeleinstellbare Spindelscheibe passt sich dieser Aufweitung an und gewährleistet einen einwandfreien Betrieb. Die in den Drehrichtungen formschlüssige Anordnung der Spindelscheibe ist zweckmäßig, wenn zwischen der Spindelscheibe und der Spindelmutter ein Anschlag wirksam ist, der ein Drehmoment beim Anschlagen übertragen kann.

Die Spindelscheibe ist vorzugsweise an einem Stützlager axial abgestützt. Dieses Stützlager kann durch eine an der Gewindespindel ausgebildete, vorzugsweise ballig geformte Schulter umgesetzt sein, so dass die beispielsweise mit einer konisch geformten Lagerfläche versehene Spindelscheibe taumelfähig an dieser balligen Schulter abgestützt ist.

### Kurze Beschreibung der Zeichnungen

Nachstehend wird die Erfindung anhand von zwei in insgesamt zehn Figuren abgebildeten Ausführungsbeispielen näher erläutert. Es zeigen:
- Figur 1: einen erfindungsgemäßen Kugelgewindetrieb in perspekti- vischer Darstellung,
- Figur 2: den Kugelgewindetrieb aus Figur 1 mit einem Teilschnitt,
- Figur 3: den erfindungsgemäßen Kugelgewindetrieb aus Figur 1 im Längsschnitt,
- Figuren 4 und 5: ein Einzelteil des erfindungsgemäßen Kugelgewindetrie- bes aus Figur 1,
- Figur 6: einen weiteren erfindungsgemäßen Kugelgewindetrieb im Längsschnitt,
- Figuren 7 und 8: ein Einzelteil des erfindungsgemäßen Kugelgewindetrie- bes aus Figur 6, und
- Figuren 9 und 10: ein weiteres Einzelteil des erfindungsgemäßen Kugelge- windetriebes aus Figur 6

### Detaillierte Beschreibung der Zeichnungen

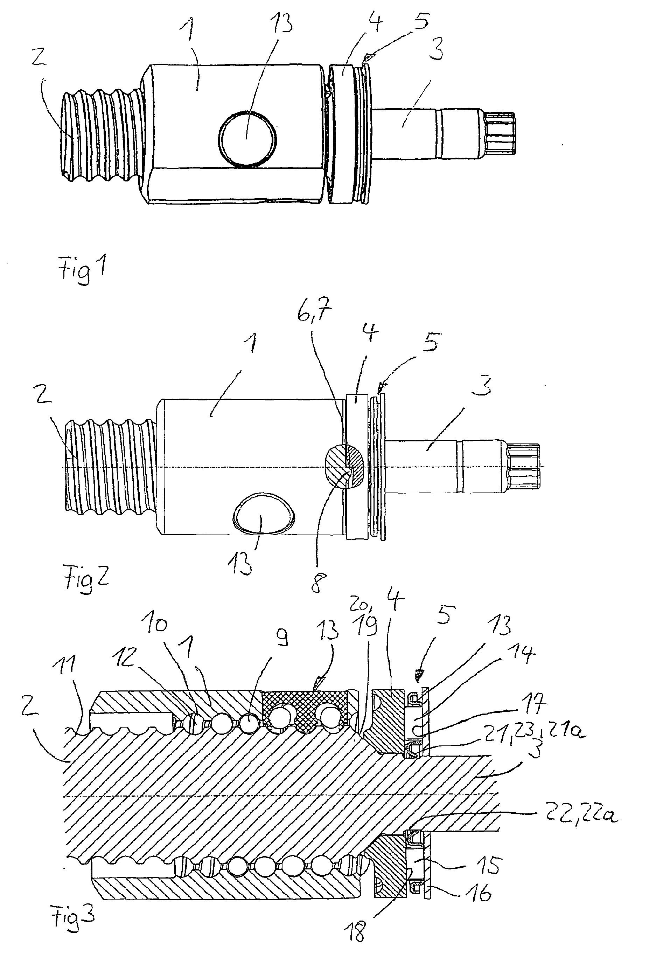

Figur 1 zeigt einen erfindungsgemäßen Kugelgewindetrieb in perspektivischer Darstellung. Eine Spindelmutter 1 ist auf einer Gewindespindel 2 drehbar gelagert. Die Gewindespindel 2 weist einen verjüngten Wellenabschnitt 3 auf, der mit einer Spindelscheibe 4 und einem Axialwälzlager 5 versehen ist. Die antreibbare Gewindespindel 2 kann über das Axialwälzlager 5 an einem hier nicht abgebildeten Gehäuse in axialer Richtung abgestützt werden.

Figur 2 zeigt den erfindungsgemäßen Kugelgewindetrieb aus Figur 1, jedoch mit einem Teilabschnitt. Der Figur ist zu entnehmen, dass die Spindelscheibe 4 an ihrer der Spindelmutter 1 zugewandten Seite eine in Umfangsrichtung verlaufende keilförmige Ausnehmung 6 aufweist, die einen Anschlag 7 für die Spindelmutter 1 bildet. Der Figur ist zu entnehmen, dass die Spindelmutter 1 an ihrer der Spindelscheibe 4 zugewandten Stirnseite mit einem Vorsprung 8 versehen ist, der gegen den Anschlag 7 anschlägt.

Figur 3 zeigt den erfindungsgemäßen Kugelgewindetrieb im Längsschnitt. Der Figur ist zu entnehmen, dass die Spindelmutter 1 über Kugeln 9 auf der Gewindespindel 2 gelagert ist. Die Kugeln 9 wälzen an schraubenförmig um die Spindelachse gewundenen Kugelrillen 10,11 ab, die an der Kugelmutter 1 und an der Gewindespindel 2 ausgebildet sind. Diese Kugelrillen 10,11 begrenzen endlose Kugelkanäle 12, in denen die Kugeln 9 endlos umlaufen. Dieser Kugelgewindetrieb ist mit einer an sich bekannten Kugelumlenkung 13 versehen, so dass die Kugeln 9 von einem Anfang zu einem Ende des endlosen Kugelkanals 12 umgelenkt werden.

Der Figur 3 ist ferner zu entnehmen, dass das Axialwälzlager 5 einen Axiallagerkäfig 13a aufweist, in dessen Taschen 14 als Wälzkörper ausgebildete Rollen 15 aufgenommen sind. Ferner ist hier eine Axiallagerscheibe 16 vorgesehen, die auf dem verjüngten Wellenabschnitt 3 angeordnet ist, und die an ihrer den Rollen 15 zugewandten Stirnseite mit einer Laufbahn 17 für die Rollen 15 versehen ist. Diese Axiallagerscheibe 16 ist optional, und kann auch wegfallen, wenn an dem bereits oben erwähnten Gehäuse eine entsprechende Laufbahn für die Rollen 15 ausgebildet ist. Der Figur ist ferner zu entnehmen, dass die Spindelscheibe 4 an ihrer den Rollen 15 zugewandten Stirnseite mit einer Laufbahn 18 für die Rollen 15 versehen ist.

Die Spindelscheibe 4 ist über eine Keilverzahnung in beiden Drehrichtungen formschlüssig auf dem verjüngten Wellenabschnitt 3 der Gewindespindel 2 angeordnet, wobei jedoch die Spindelscheibe 4 taumelfähig auf diesem verjüngten Wellenabschnitt 3 angeordnet ist.

Figur 3 ist ferner zu entnehmen, dass eine zwischen der Gewindespindel 2 und dem einstückig anschließenden verjüngten Wellenabschnitt 3 vorgesehene Schulter 19 als Stützlager 20 für die Spindelscheibe 4 ausgebildet ist. Der Kraftfluss in axialer Richtung wird demzufolge von der Spindelmutter 1 über die Kugeln 9 in die Gewindespindel 2 und von dort über die Schulter 19 in die Spindelscheibe 4 und das Axialwälzlager 5 geleitet.

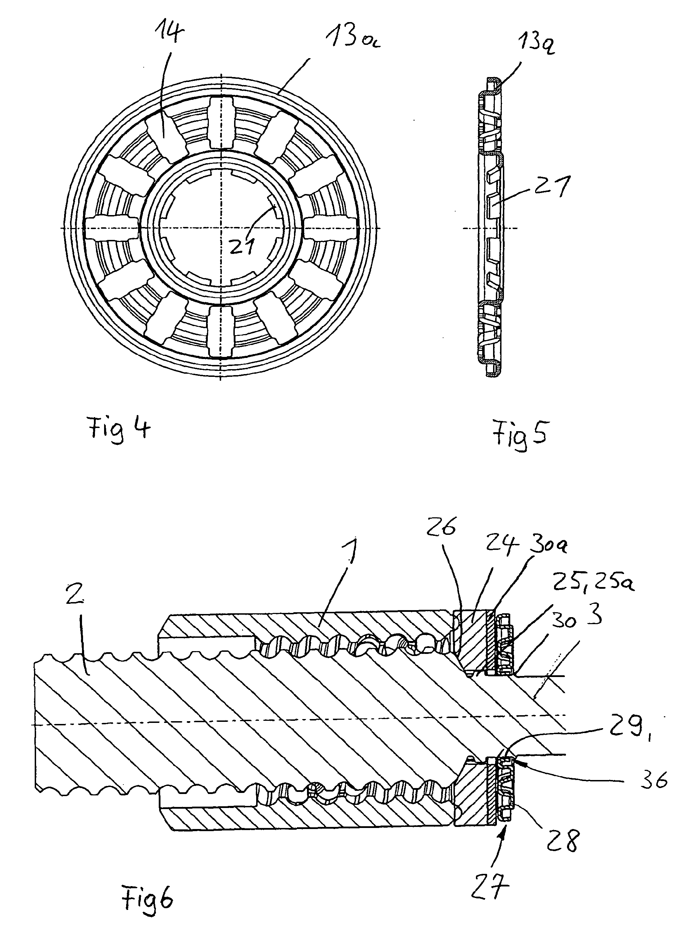

Die Figuren 4 und 5 zeigen den Axiallagerkäfig 13a in zwei Ansichten. Den beiden Figuren ist zu entnehmen, dass eine Vielzahl von über den Umfang verteilt angeordneten Taschen 14 zur Aufnahme der hier nicht abgebildeten Rollen 15 vorgesehen ist. Der Axiallagerkäfig 13a an sich ist aus dünnem Blech in einem Umformprozess spanlos hergestellt. Am Innenumfang des Axiallagerkäfigs 13a sind eine Vielzahl von federnden Zungen 21 ausgebildet. Diese federnden Zungen 21 rasten in eine Ringnut 22 ein, die an dem verjüngten Wellenabschnitt 3 der Kugelgewindespindel 2 ausgebildet ist (Figur 3). Die Zungen 21 bilden demzufolge Rasten 21a und die Ringnut 22 bildet eine Aufnahme 22a für diese Rasten 21a.

Dieser Axiallagerkäfig 13a kann auf den verjüngten Wellenabschnitt 3 aufgeschoben werden, wobei schließlich die federnden Zungen 21 in diese Ringnut 22 unter einer Entspannung einschnappen. Die Ringnut 22 bildet eine Aufnahme für die Zungen 21. Der Axiallagerkäfig 13a ist somit verliersicher an der Gewindespindel 2 gehalten. Üblicherweise schnappen die Rollen 15 in die Taschen 14 des Axiallagerkäfig 13a ein, so dass der mit den Rollen 15 vormontierte Axiallagerkäfig 13a als Baueinheit gemeinsam mit der Gewindespindel 2 und der Spindelmutter 1 ausgebildet ist. Die federnden Zungen 21 bilden gemeinsam mit der Ringnut 22 eine Verliersicherung 23.

Figur 6 zeigt einen weiteren erfindungsgemäßen Kugelgewindetrieb im Längsschnitt. Dieser erfindungsgemäßen Kugelgewindetrieb unterscheidet sich von dem zuvor beschriebenen Kugelgewindetrieb im wesentlichen durch Modifizierungen an der Spindelscheibe und an dem Axialwälzlager, was nachstehend näher erläutert wird.

Eine Spindelscheibe 24 ist ebenso wie die zuvor beschriebene Spindelscheibe über eine Keilverzahnung 25 formschlüssig in beiden Drehrichtungen an dem verjüngten Wellenabschnitt 3 der Gewindespindel 2 angeordnet. Der Figur 6 ist zu entnehmen, dass die Gewindespindel 2 an ihrem verjüngten Wellenabschnitt 3 mit axial kurz bauenden Zähnen 25a versehen ist, die Teil der Keilverzahnung 25 sind. Ebenso wie bei dem zuvor beschriebenen Ausführungsbeispiel ist diese Spindelscheibe 24 taumelfähig auf dem Wellenabschnitt 3 angeordnet. Die axial kurz bauenden Zähne 25a begünstigen die Taumelfähigkeit der Spindelscheibe 24. Die Spindelscheibe 24 ist an einer Schulter 26 abgestützt, die an der Gewindespindel 2 im Übergang zu dem abgesetzten Wellenabschnitt 3 ausgebildet ist.

An der Gewindespindel 2 ist außerdem ein Axialwälzlager 27 verliersicher aufgenommen. Ein Axiallagerkäfig 28 greift mit seinem Innenumfang in eine an dem Wellenabschnitt 3 ausgebildete Aufnahme 29 ein, die in den axialen Richtungen einerseits begrenzt ist durch die Spindelscheibe 24 und andererseits durch einen umlaufenden Wulst 30, der durch Materialumformung an dem Wellenabschnitt 3 erzeugt wurde.

Der Figur 6 ist ferner zu entnehmen, dass eine Axiallagerscheibe 30a zwischen dem Axiallagerkäfig 28 und der Spindelscheibe 24 angeordnet ist. Diese Axiallagerscheibe 30a kann auch entfallen, wenn die Spindelscheibe 24 bereits mit einer Laufbahn für die Wälzkörper des Axialwälzlagers versehen ist.

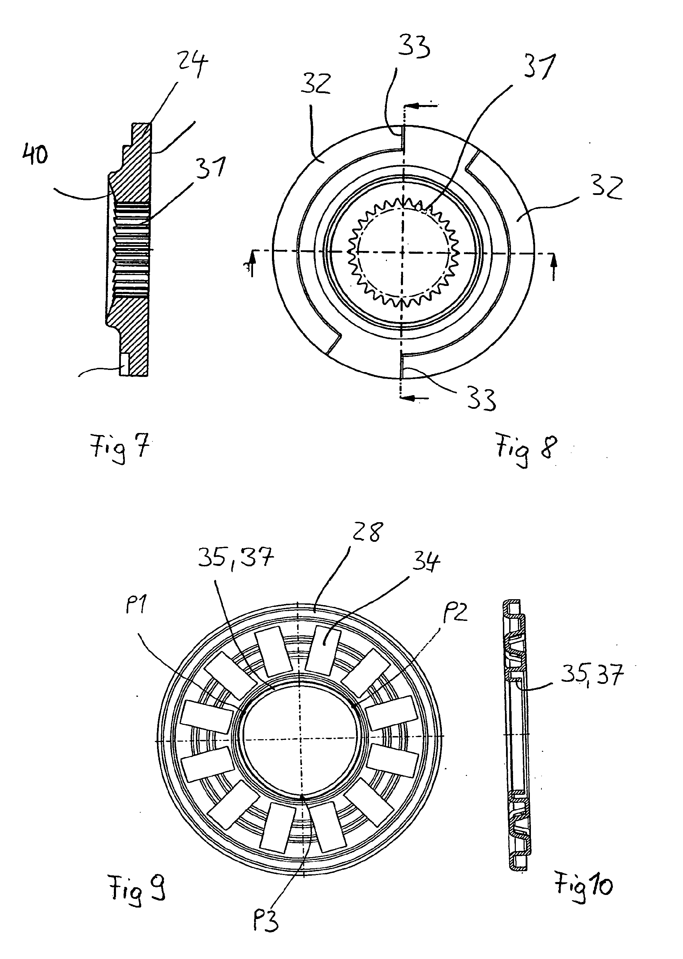

Die Figuren 7 und 8 zeigen die Spindelscheibe 24 im Längsschnitt und in einer Ansicht, wobei in beiden Figuren deutlich eine Innenverzahnung 31 als Teil der Keilverzahnung 25 zu erkennen ist. An ihrer der Schulter 26 zugewandten Stirnseite ist die Spindelscheibe 24 mit einer Konusöffnung 40 versehen, die an die Schulter 26 der Gewindespindel 2 angepasst ist und ein Taumeln der Spindelscheibe 24 ermöglicht.

Insbesondere der Figur 8 ist zu entnehmen, dass die Spindelscheibe 24 an ihrer der Spindelmutter 1 zugewandten Stirnseite mit zwei in Umfangsrichtung angeordneten, axial keilförmig verlaufenden Ausnehmungen 32 versehen ist, die jeweils an einem Anschlag 33 enden. Nicht weiter abgebildete Vorsprünge an der Spindelmutter 1 greifen in diese Ausnehmungen 32 ein und schlagen gegen diese Anschläge 33 an, bevor ein axiales Verspannen zwischen der Spindelmutter 1 und der Axiallagerscheibe 24 einsetzen kann.

Die Figuren 9 und 10 und zeigen den Axiallagerkäfig 28 in einer Ansicht und in einer Schnittdarstellung. Insbesondere Figur 9 zeigt in Umfangsrichtung verteilt angeordnete Taschen 34 für hier nicht abgebildete Rollen als Wälzkörper. Dieser Axiallagerkäfig 28 ist ebenfalls aus dünnem Blech spanlos durch Umformen hergestellt. Der Innenumfang des Axiallagerkäfig 28 ist durch einen umlaufenden Bord 35 gebildet, der jedoch nicht zylindrisch, sondern etwa polygonförmig geformt ist.

In der Figur 9 sind insgesamt drei Punkte P1, P2 und P3 markiert, an denen dieser Bord 35 am weitesten entfernt von der Käfigachse ist. Zwischen diesen Punkten nähert sich der Käfigbord 35 der Käfigachse, wobei vorliegend der mittig zwischen zwei aufeinanderfolgenden Punkten P1, P2, P3 liegende Abschnitt des Käfigbordes 35 der Käfigachse am nächsten gelegen ist. Ein von dem Käfigbord 35 umfasster gedachter Hüllkreis tangiert den Käfigbord 35 an diesen mittig liegenden Abschnitten. Der Durchmesser dieses gedachten Hüllkreises ist kleiner als der Außendurchmesser des Wulstes 30, der an den Wellenabschnitt 3 der Gewindespindel 2 angeprägt ist.

Der Axiallagerkäfig 28 wird auf den Wellenabschnitt 3 aufgeschoben, wobei das freie Ende des Käfigbordes 35 von dem Wulst 30 abgewandt ist. Wenn der Käfigbord 35 unter axialem Verschieben des Axiallagerkäfigs 28 über den Wulst 30 geschoben wird, federt der Käfigbord 35 mit seinen mittig zwischen den PunktenP1, P2, P3 liegenden Abschnitten radial auswärts, und federt schließlich wieder unter Entspannung radial einwärts , wenn das freie Ende des Käfigbordes 35 den Wulst 30 passiert hat. Diese mittigen Abschnitte bilden demzufolge Rasten 37, die in die Aufnahme 29 einrasten. Der Axiallagerkäfig 28 kann anschließend ohne besondere Maßnahmen nicht mehr axial von dem Wellenabschnitt 3 abgezogen werden. Der Käfigbord 35 bildet gemeinsam mit dem Wulst 30 eine Verliersicherung 36 (Figur 6), die den Axiallagerkäfig 28 verliersicher auf dem Wellenabschnitt 3 der Gewindespindel 2 hält.

Die hier beschriebenen Ausführungsbeispiele zeigen Schnappverbindungen zwischen dem Axiallagerkäfig und dem Wellenabschnitt, die ein leichtes Montieren des Axiallagerkäfig ermöglichen, die jedoch gleichzeitig ein unbeabsichtigtes Demontieren verhindern.

Die Formgebung am Innenumfang der erfindungsgemäßen Axiallagerkäfige ermöglicht eine gute Innenführung des Käfigs auf dem Wellenabschnitt 3. Mit der Erfindung wird nicht nur eine Montage der mit diesen Axialwälziagern vormontierten Kugelgewindetriebe erleichtert, sondern der verliersicher angeordnete Käfig hält zugleich die Spindelscheibe verliersicher auf der Gewindespindel 2. Die an dem Wellenabschnitt 3 vorgesehene Aufnahme für den Axiallagerkäfig ist dabei in axialer Richtung so bemessen, dass der Axiallagerkäfig ausreichend Axialspiel hat, wobei jedoch sichergestellt ist, dass die Spindelscheibe nicht von ihrem Sitz auf dem Wellenabschnitt 3 wegrutschen kann.

Während die hier beschriebenen Ausführungsbeispiele Axialwälzlager mit einem Axiallagerkäfig aus Metall zeigen, ist es selbstverständlich möglich, auch Kunststoffkäfige mit erfindungsgemäßen Verliersicherungen vorzusehen.

Erfindungsgemäße Kugelgewindetriebe eignen sich in günstiger Weise für den Einsatz bei einer elektromechanischen Park - oder Betriebsbremse mit integriertem Bremssattel.

Ein besonderer Vorteil der Erfindung kann auch darin gesehen werden, dass für die Bereitstellung der Verliersicherung keine zusätzlichen Bauteile erforderlich sind. Vielmehr kann durch die besondere Formgebung des Axiallagerkäfigs im Zusammenspiel mit der besonderen Formgebung des Wellenabschnitts 3 bereits die Verliersicherung bereitgestellt werden. Die Ausbildung dieser erfindungsgemäßen Verliersicherungen kann somit kostenneutral bereitgestellt werden.

### Bezugszeichenliste

- 1: Spindelmutter
- 2: Gewindespindel
- 3: Wellenabschnitt
- 4: Spindelachse
- 5: Axialwälzlager
- 6: keilförmigen Ausnehmung
- 7: Anschlag
- 8: Vorsprung
- 9: Kugel
- 10: Kugelrille
- 11: Kugelrille
- 12: Kugelkanal
- 13: Kugelumlenkung
- 13: a Axiallagerkäfig
- 14: Tasche
- 15: Rolle
- 16: Axiallagerscheibe
- 17: Laufbahn
- 18: Laufbahn
- 19: Schulter
- 20: Stützlager
- 21: Zunge
- 21: a Raste
- 22: Ringnut
- 22a: Aufnahme
- 23: Verliersicherung
- 24: Spindelscheibe
- 25: Keilverzahnung
- 25a: Zahn
- 26: Schulter
- 27: Axialwälzlager
- 28: Axiallagerkäfig
- 29: Aufnahme
- 30: Wulst
- 30a: Axiallagerscheibe
- 31: Innenverzahnung
- 32: Ausnehmung
- 33: Anschlag
- 34: Tasche
- 35: Käfigbord
- 36: Verliersicherung
- 37: Raste
- 40: konusöffnung

## Patentansprüche

1. Kugelgewindetrieb, mit einer auf einer Gewindespindel (2) angeordneten Spindelmutter (1), und mit einem an der Gewindespindel (2) angeordneten Axiallager mit einem gegenüber der Gewindespindel (2) drehbar angeordneten Lagerteil wobei das Lagerteil über eine Verliersicherung (23, 36) verliersicher an der Gewindespindel (2) angeordnet ist, **dadurch gekennzeichnet, dass** das Axiallager als auf der Gewindespindel (2) angeordnetes Axialwälzlager (5, 27) ausgeführt ist, dessen das Lagerteil bildender Axiallagerkäfig (13a, 28) mit über den Umfang verteilt angeordneten Taschen (14, 34) versehen ist, in denen Wälzkörper angeordnet sind, wobei der Axiallagerkäfig (13a, 28) mit einer Raste (21a, 37) versehen ist, die in eine Aufnahme (22a, 29) der Gewindespindel (2) eingreift.

2. Kugelgewindetrieb nach Anspruch 1, bei dem die Raste (21 a, 37) am Innenumfang des Axiallagerkäfigs (13a, 28) ausgebildet ist.

3. Kugelgewindetrieb nach Anspruch 2, bei dem ein an dem Innenumfang ausgebildeter Käfigbord (35) entlang der Spindelachse gesehen etwa polygonförmig ausgebildet ist, der mit seinen elastisch aufweitbaren Polygonseiten in die Aufnahme (22a, 29) eingreift.

4. Kugelgewindetrieb nach Anspruch 1, bei dem das Axiallager eine mit einer Axiallagerfläche versehene Spindelscheibe (4, 24) mit einem umfangsseitig wirksamen Anschlag (7, 33) für die Spindelmutter (1) aufweist.

5. Kugelgewindetrieb nach Anspruch 4, bei dem die Spindelscheibe (4, 24) auf der Spindelachse in beiden Drehrichtungen formschlüssig, aber taumelfähig auf der Gewindespindel (2) angeordnet ist.

6. Kugelgewindetrieb nach Anspruch 5, bei dem die Spindelscheibe (4, 24) an einem Stützlager (20) axial abgestützt ist.

7. Kugelgewindetrieb nach Anspruch 6, bei dem das Stützlager durch eine an der Gewindespindel (2) ausgebildete Schulter (19, 26) gebildet ist.

8. Kugelgewindetrieb nach Anspruch 1, bei dem die Verliersicherung (23, 36) Schnappmittel aufweist, die in eine Aufnahme (22a, 29) der Gewindespindel (2) einschnappen.

## Claims

1. Ball-screw drive, having a spindle nut (1) arranged on a threaded spindle (2) and having an axial bearing which is arranged on the threaded spindle (2) and which has a bearing part arranged so as to be rotatable relative to the threaded spindle (2), with the bearing part being arranged so as to be captively retained on the threaded spindle (2) by a captive retention means (23, 36), **characterized in that**, the axial bearing is designed as an axial rolling bearing (5, 27) arranged on the threaded spindle (2), the axial bearing cage (13a, 28), which forms the bearing part, of which axial rolling bearing (5, 27) is provided with pockets (14, 34) which are arranged distributed over the circumference and in which rolling bodies are arranged, with the axial bearing cage (13a, 28) being provided with a detent (21a, 37) which engages into a receptacle (22a, 29) of the threaded spindle (2).

2. Ball-screw drive according to Claim 1, in which the detent (21a, 37) is formed on the inner circumference of the axial bearing cage (13a, 28).

3. Ball-screw drive according to Claim 2, in which a cage rim (35) which is formed on the inner circumference is of approximately polygonal design as viewed along the spindle axis, and engages with its elastically expandable polygon sides into the receptacle (22a, 29).

4. Ball-screw drive according to Claim 1, in which the axial bearing has a spindle disk (4, 24) which is provided with an axial bearing surface and which has a circumferentially acting stop (7, 33) for the spindle nut (1).

5. Ball-screw drive according to Claim 4, in which the spindle disk (4, 24) is arranged on the threaded spindle (2) in a positively locking fashion in both rotational directions on the spindle axis but so as to be capable of performing a tumbling motion.

6. Ball-screw drive according to Claim 5, in which the spindle disk (4, 24) is supported axially on a thrust bearing (20).

7. Ball-screw drive according to Claim 6, in which the thrust bearing is formed by a shoulder (19, 26) formed on the threaded spindle (2).

8. Ball-screw drive according to Claim 1, in which the captive retention means (23, 36) has snap-action means which snap into a receptacle (22a, 29) of the threaded spindle (2).

## Revendications

1. Vis d'entraînement à billes comprenant un écrou de broche (1) disposé sur une broche filetée (2), et un palier axial disposé sur la broche filetée (2) avec une partie de palier disposée à rotation par rapport à la broche filetée (2), la partie de palier étant disposée de manière imperdable sur la broche filetée (2) par le biais d'une fixation imperdable (23, 36), **caractérisée en ce que** le palier axial est réalisé sous forme de palier à roulement axial (5, 27) disposé sur la broche filetée (2), dont la cage de palier axial (13a, 28) formant la partie de palier est pourvue de cavités (14, 34) disposées de manière répartie sur la périphérie, dans lesquelles sont disposés des corps de roulement, la cage de palier axial (13a, 28) étant pourvue d'un cliquet (21a, 37) qui vient en prise dans un logement (22a, 29) de la broche filetée (2).

2. Vis d'entraînement à billes selon la revendication 1, dans laquelle le cliquet (21a, 37) est réalisé sur la périphérie interne de la cage de palier axial (13a, 28).

3. Vis d'entraînement à billes selon la revendication 2, dans laquelle un bord de cage (35) réalisé sur la périphérie interne, vu le long de l'axe de la broche, est réalisé approximativement en forme de polygone, qui vient en prise avec ses côtés de polygone pouvant être élargis élastiquement dans le logement (22a, 29).

4. Vis d'entraînement à billes selon la revendication 1, dans laquelle le palier axial présente un disque de broche (4, 24) pourvu d'une surface de palier axial avec une butée (7, 33) agissant du côté de la périphérie pour l'écrou de broche (1).

5. Vis d'entraînement à billes selon la revendication 4, dans laquelle le disque de broche (4, 24) est disposé de manière engagée avec l'axe de broche par coopération de forme dans les deux sens de rotation mais capable de nutation sur la broche filetée (2).

6. Vis d'entraînement à billes selon la revendication 5, dans laquelle le disque de broche (4, 24) est supporté axialement sur un palier de support (20).

7. Vis d'entraînement à billes selon la revendication 6, dans laquelle le palier de support est formé par un épaulement (19, 26) réalisé sur la broche filetée (2).

8. Vis d'entraînement à billes selon la revendication 1, dans laquelle la fixation imperdable (23, 36) présente des moyens d'encliquetage qui s'encliquètent dans un logement (22a, 29) de la broche filetée (2).
